# EUROPÄISCHE PATENTANMELDUNG

(11) **EP 2 463 601 A2**
(43) Veröffentlichungstag der Anmeldung: **13.06.2012**
(21) Anmeldenummer: 11009662.5
(22) Anmeldetag: 07.12.2011
(51) Int. Cl.: F24J 2/04, F24J 2/20

(54) **Solarfassadenelement, Solarfassadensystem**

(30) Priorität: 07.12.2010 DE 102010054394
(71) Anmelder: EnerSearch GmbH, 71336 Waiblingen (DE)
(72) Erfinder: Klinger, Jochen, 71336 Waiblingen (DE)
(74) Vertreter: Clarenbach, Carl-Philipp

(57) **Zusammenfassung**

Die Erfindung betrifft ein Solarfassadenelement (70) für die Klimatisierung eines Gebäudes (12) mit mindestens einem umgebungsseitigen Solarwärmeabsorber (2) und mit einer gebäudeseitigen Dämmung (5) sowie mit einer Luftpassage (73), die durch den Solarwärmeabsorber (2) und die Dämmung (5) führt und dazu eine umgebungsseitige Öffnung (71) an dem Solarwärmeabsorber (2) und eine gebäudeseitige Öffnung (72) an der Dämmung (5) aufweist. Es ist vorgesehen, dass der Solarwärmeabsorber (2) zumindest bereichsweise transluzent ausgebildet ist, um durch die Luftpassage (73) strömende Luft durch Sonneneinstrahlung zu erwärmen/zu erhitzen.

Ferner betrifft die Erfindung ein Solarfassadensystem.

## Beschreibung

Die vorliegende Erfindung betrifft ein energieeffizientes Fassadendämmsystem. Insbesondere betrifft die vorliegende Erfindung ein Solarfassadenelement und ein Solarfassadendämmsystem, die eine Wärmespeicherung direkt in einem Gebäude oder Bauwerk für die effiziente Verwendung von solarer Energie und trotzdem eine gewünschte Fassadenfärbung ermöglichen.

Im Zeitalter der Energiekrisen ist es unverzichtbar, erneuerbare Ressourcen wie Solarenergie zu nutzen, um Energie einzusparen, die in Wohngebäuden oder kommerziellen Gebäuden verwendet wird. Insbesondere unter kalten klimabedingten Wetterverhältnissen werden enorme Energiemengen für Heizungszwecke in Gebäuden aufgewendet. Typischerweise werden diese Bauwerke, Häuser oder kommerziellen Gebäude mit Wärmedämmverbundsystemen (WDVS) isoliert. Das sind Verkleidungssysteme, die an die Wände des bestehenden Gebäudes oder des Bauwerks angebracht sind und welche die Außenwände mit einer isolierten, fertigen Oberfläche und einer Wasserabdichtung versehen. Die Dämmung wird auf die bestehende Fassade montiert und eine Putzschicht wird auf das Dämmmaterial aufgetragen. Diese Art von Dämmungen verhindert den Wärmetransport von dem warmen oder erhitzten Innenraum zu der relativ kälteren Außenluft. Dadurch hilft sie, Energie einzusparen.

Hinsichtlich der Energieeinsparung wird die Solarenergie für Gebäudeerwärmungszwecke genutzt. Normalerweise werden Solarsysteme auf Gebäudedächern installiert. Jedoch erlegt dies sowohl Begrenzungen der Fläche als auch Installationszwänge auf den Gebäudedächern auf. Es werden Versuche gemacht, Solarkollektoren auf Fassaden zu installieren. Jedoch schränkt die überwiegend schwarze Färbung der Absorber dieser Kollektoren die Verwendung auf Fassaden ein. Ferner ist aufgrund des erheblich höheren Gewichts der Kollektoren ein hoher bautechnischer Aufwand erforderlich, um die Solarkollektoren vertikal an den Fassaden zu installieren oder zu montieren. Außerdem treten Probleme mit den Fassaden bezüglich Wasserleckage von den vertikal montierten Kollektoren bei Regenwetter auf.

Es werden Versuche gemacht, das Gewicht des Solarkollektors zu reduzieren, indem Kunststoff oder polymerbasiertes Material verwendet wird. Jedoch ist die Langlebigkeit solcher Materialien bei herausfordernden Wetterbedingungen ein wichtiger Aspekt. In konventionellen Solarwärmesystemen wird die Luft aus dem Inneren des Gebäudes im Solarkollektor er-hitzt und dann wieder zurück in das Innere des Gebäudes geführt. Die Menge Luft pro Zeiteinheit ist von Faktoren wie verfügbare solare Bestrahlung, Effizienz der Solarkollektoren, verfügbare Fläche und Erwägungen zu Druckverlusten eingeschränkt. Es gibt keine Möglichkeit, die eingefangene Solarenergie der Luft zu speichern, um sie effizient bezüglich der Nutzung der thermischen Masse eines Bauwerks oder eines Gebäudes zu verwenden.

Um effiziente energieeinsparende Möglichkeiten für ein Gebäude bereitzustellen, ist es wünschenswert, die Aspekte der Gebäudedämmung und der gewünschten Fassadenfärbung zu integrieren, aber trotzdem die Solarenergie für effiziente Heizungszwecke zu nutzen und zu speichern. Es ist wichtig, eine solche Integration zu schaffen, die für verschiedene Bauwerke oder Gebäude im Hinblick auf die Ästhetik geeignet, techno-ökonomisch rentabel und in herausfordernden Umgebungen, wie kaltem Wetter, bei welchem Feuchtigkeitsablagerungen Probleme aufwerfen, durchführbar ist.

Im Rahmen der vorliegenden Erfindung kann es mühelos von einem Fachmann erwogen werden, dass das Erwärmen von Innenluft im Grunde die Klimatisierung von Luft bedeutet, wobei eine der Eigenschaften der Luft (in diesem Fall die Temperatur) variabel ist. Deshalb, obwohl sich die obige Diskussion auf das Erwärmen der Innenluft bezieht, was auch überwiegend der Fall ist, kann der Anwendungsbereich der Erfindung auch zu einer Luftbefeuchtung/Luftentfeuchtung und einer Kühlung von Luft erweitert werden. Unter dem Wort "Gebäude" innerhalb dieser Erfindung sind alle Wohngebäude, kommerziellen Gebäude oder andere Bauwerke zu verstehen.

Der relevante Stand der Technik diesbezüglich wird wie folgt aufgelistet:

Die europäische Patentanmeldung EP 0 440 156 offenbart ein Fassadenelement, für inhärente Temperaturregelung zur passiven Gebäudebeheizung, bestehend aus einer transparenten Abdichtung und einem transparenten Wärmedämmmaterial und einer Schicht aus einem Material mit temperaturabhängiger Lichtdurchlässigkeit (thermotropes Material) vor dem zu beheizenden Gebäudeteil, wobei die thermotrope Schicht parallel zu dem Gebäudeteil auf der Innenseite des transparenten Wärmedämmmaterials angeordnet ist, insbesondere im vorderen Drittel der der Sonne zugewandten Seite angeordnet ist. Eine zweite Möglichkeit besteht darin, zwei Schichten eines thermotropen Materials vor und hinter dem transparenten Wärmedämmmaterial vorzusehen. Eine dritte Möglichkeit besteht darin, die thermotrope Schicht zwischen Absorber und Gebäudeteil anzubringen. Das Fassadenelement kann vorteilhafterweise als Sonnenkollektor verwendet werden.

Die europäische Patentanmeldung EP 1 223 254 offenbart ein Wärmedämmsystem eines Gebäudes. Insbesondere betrifft die vorliegende Erfindung ein Wärmedämmsystem, in welchem künstliche Veränderungen aufgrund der Bedürfnisse der Umwelt möglich sind. Ein Ziel dieser Erfindung ist es, die Wärmedämmkapazität des Gebäudes zu erhöhen, indem eine Luftschicht das Gebäude umgibt. Ein weiteres Ziel der vorliegenden Erfindung ist es, ein Wärmedämmsystem eines Gebäudes vorzuschlagen, in welchem eine Luftstromzone zwischen der Innen- und der Außenwand gebildet ist, indem die Außenwand mit einem gewissen Abstand zur Innenwand gebaut wird. Ein Luftstromzonenteiler teilt die Luftstromzone in einen Spaltenraum entsprechend der Richtung und den Fassaden des Gebäudes.

Das europäische Patent EP 1 649 221 offenbart einen in eine Wand integrierbaren thermischen Sonnenkollektor mit Wärmespeicherkapazität, der eine transparente Schicht und eine Sonnenstrahlungs-Absorptionsschicht, die durch einen Luftspalt von der transparenten Schicht getrennt ist, aufweist. Eine Wärmespeicherschicht aus Phasenübergangsmaterial ist in engem Kontakt mit der Sonnenstrahlungs-Absorptionsschicht, um einen Wärmetransfer zu erleichtern. Eine Bauplatte aus thermischem Isolierungsmaterial ist an die Wärmespeicherschicht angrenzend angeordnet.

Das deutsche Patent DE 198 00 560 offenbart einen Solarflachkollektor mit einem Absorber und zwei transparenten Scheiben mit zwei niedrigeren Wärmeisolationsschichten und wenigstens einer Lufteinlassöffnung. Der Kanaldurchmesser des profilierten Strömungskanals und des aus der inneren transparenten Scheibe gebildeten Strömungskanals ist so gewählt, dass die Reynoldszahl der Kanalströmung größer ist als 5000.

Über die Jahre ist der Bedarf an einem Fassadendämmsystem gewachsen, das die verschiedenen Aspekte der Dämmung, der gewünschten Fassadenfärbung, dem Ausschluss von ungewünschtem Kondensat oder Feuchtigkeit, der Speicherung und dem Nutzen von Solarenergie für die effiziente Erwärmung der Innenraumluft sowie des Gebäudes deckt, aber trotzdem den ästhetischen Überlegungen gerecht wird.

### Aufgabe der Erfindung

Der Erfindung liegt die Aufgabe zugrunde, ein Solarfassadenelement sowie ein Solarfassadensystem zu schaffen, die eine verbesserte Klimatisierung für Gebäude/Bauwerke gewährleisten.

### Offenbarung der Erfindung

Die der Erfindung zugrunde liegende Aufgabe wird durch ein Solarfassadenelement mit den Merkmalen des Anspruchs 1 gelöst. Das erfindungsgemäße Solarfassadenelement hat den Vorteil, dass es in die Dämmung eines Gebäudes derart integrierbar ist, dass es die bisherige Dämmung des Gebäudes ersetzt beziehungsweise nicht beeinträchtigt, und dass es dem Gebäude Frischluft zuführen oder Abluft aus dem Gebäude herausführen kann, wobei während des Lufttransportes ein vorteilhafter Energie- insbesondere Wärmeaustausch stattfindet. Das erfindungsgemäße Solarfassadenelement für die Klimatisierung eines Gebäudes, das für die Klimatisierung des Gebäudes insbesondere an einer Wand, insbesondere Außenwand, des Gebäudes montierbar/montiert ist, weist mindestens einen umgebungsseitigen Solarwärmeabsorber und eine gebäudeseitige Dämmung sowie eine Luftpassage auf, die durch den Solarwärmeabsorber und die Dämmung führt und dazu eine umgebungsseitige Öffnung an dem Solarwärmeabsorber und eine gebäudeseitige Öffnung an der Dämmung aufweist, wobei der Wärmeabsorber zumindest bereichsweise transluzent ausgebildet ist, um durch die Luftpassage strömende Luft durch Sonneneinstrahlung zu erwärmen beziehungsweise zu erhitzen, und wobei die gebäudeseitige Öffnung der Luftpassage vorzugsweise in eine gebäudeseitig randoffene Aussparung der Dämmung mündet. Die Ausrichtung beziehungsweise Anordnung/Ausrichtung der Bestandteile des Solarfassadenelements sind nach umgebungsseitig und gebäudeseitig aufgeteilt. Unter einer gebäudeseitigen Ausrichtung oder Anordnung ist somit eine Anordnung oder Ausrichtung des jeweiligen Elementes auf oder zu der dem Gebäude zugewandten Seite des Solarfassadenelementes im verbauten Zustand an dem Gebäude zu verstehen, während unter einer umgebungsseitigen Ausrichtung oder Anordnung entsprechend Bezug auf die von dem Gebäude abgewandte und der Umgebung des Gebäudes zugewandte Seite genommen wird. Alternativ könnte prinzipiell auch von einer ersten und einer zweiten Seite die Rede sein, wobei es sich bei der ersten Seite und der zweiten Seite um unterschiedliche, insbesondere gegenüberliegende Seiten des Solarfassadenelements handelt. Das Solarfassadenelement weist somit eine Dämmung auf, die die Dämmung des Gebäudes ergänzen kann und somit eine vollständige Integrierung des Solarfassadenelementes in eine Dämmung des Gebäudes erlaubt, ohne dass die eigentliche Dämmung des Gebäudes beeinträchtigt wird. Bevorzugt entspricht die Dämmung des Solarfassadenelementes daher der Dämmung des Gebäudes, in welche es integriert werden soll. Insbesondere parallel zu der Dämmung ist der Solarwärmeabsorber vorgesehen und umgebungsseitig angeordnet, so dass der Solarwärmeabsorber durch die Sonneneinstrahlung beaufschlagbar ist. Die Luftpassage führt von der umgebungsseitigen beziehungsweise von der auf der ersten Seite ausgebildeten Öffnung des Solarwärmeabsorbers durch den Solarwärmeabsorber und anschließend durch die Dämmung, in welcher hierzu ein entsprechender Kanal oder einer entsprechenden Passage ausgebildet ist, zu der gebäudeseitigen beziehungsweise zu der auf der zweiten Seite ausgebildeten Öffnung und damit zu der Rückseite der Dämmung, die dem Gebäude zugeordnet/zuordenbar ist. Dadurch gelangt aus der Umgebung kommende Frischluft, die durch den Solarwärmeabsorber erwärmt/erhitzt wurde, hinter die Dämmung, insbesondere in die randoffene Aussparung, die dem Gebäude zuordenbar/zugeordnet ist und im verbauten Zustand zusammen mit der Gebäudewand einen Kanal oder eine Passage für die Luft bildet. Dadurch findet im verbauten Zustand ein Wärmeaustausch an dem Gebäude hinter der Dämmung statt, durch welche entweder das Gebäude beziehungsweise die Gebäudewand aufgewärmt wird oder das Gebäude oder die Gebäudewand Wärme an die vorbeiströmende Frischlust abgibt. Durch Vorsehen des Solarfassadenelementes an einem Gebäude kann das Gebäude somit als Wärmespeicher für die durch den Solarwärmeabsorber - im Folgenden auch als Wärmeabsorber oder Absorber bezeichnet - an die Luft abgegebene Wärme genutzt werden, wobei die gespeicherte Wärme bei Bedarf auch an einströmende Frischluft, die eine geringere Temperatur aufweist, abgegeben werden kann.

Vorzugsweise ist wenigstens eine insbesondere umgebungsseitige Platte beziehungsweise Wand oder Schicht des Solarwärmeabsorbers transluzent ausgebildet. Der Solarwärmeabsorber weist vorzugsweise zwei oder mehr parallel zueinander angeordnete flache Platten oder Wände auf, die bevorzugt durch dazwischen liegende Stege auf Abstand zueinander gehalten werden. Zumindest eine umgebungsseitige Platte dieser Platten ist entsprechend transluzent beziehungsweise transparent ausgebildet, so dass Sonneneinstrahlung in das Innere des Wärmeabsorbers gelangt, um dort einen Wärmeeintrag in die durch den Wärmeabsorber strömende Luft zu erhöhen. Vorzugsweise ist die umgebungsseitige Öffnung an einem Ende der umgebungsseitigen Platte ausgebildet. Eine gebäudeseitige Platte des Wärmeabsorbers beziehungsweise Solarwärmeabsorbers ist vorzugsweise im Wesentlichen lichtundurchlässig, insbesondere lichtabsorbierend ausgebildet, so dass die Sonneneinstrahlung vollständig in dem Wärmeabsorber aufgenommen wird. Die gebäudeseitige Platte ist dabei vorzugsweise mit einer hellen Farbe versehen, um durch Reflexion den Wärmeeintrag zu erhöhen.

Gemäß einer vorteilhaften Weiterbildung der Erfindung ist vorgesehen, dass zwischen dem Wärmeabsorber und der Dämmung zumindest ein weiterer Wärmeabsorber angeordnet ist, wobei die Luftpassage sequentiell beziehungsweise nacheinander durch die Wärmeabsorber führt. Die einströmende Frischluft wird somit zuerst durch den einen, umgebungsseitigen Wärmeabsorber geführt, anschlie-βend durch den innenliegenden weiteren Wärmeabsorber und zuletzt durch die gebäudeseitige Dämmung. Durch das Vorsehen der zwei Wärmeabsorber, die zweckmäßigerweise parallel zueinander angeordnet sind, wird der Wärmeeintrag in die hindurchströmende Frischluft erhöht. Die Luftpassage wird dabei bevorzugt durch entsprechende Kanäle in den Solarwärmeabsorbern und der Dämmung gebildet.

Besonders bevorzugt ist vorgesehen, dass eine gebäudeseitige Platte oder alle Platten des einen, umgebungsseitig angeordneten Wärmeabsorbers transluzent ausgebildet sind, so dass die Sonneneinstrahlung bis zu dem weiteren Wärmeabsorber gelangt, um die dort durchströmende Luft weiter zu erwärmen.

Vorzugsweise ist der weitere Solarwärmeabsorber zumindest im Wesentlichen lichtundurchlässig oder lichtabsorbierend ausgebildet. Hierzu sind insbesondere die Platten des weiteren Wärmeabsorbers aus einem zumindest im Wesentlichen lichtundurchlässigen Material, wie beispielsweise aus dunklem oder schwarzem Kunststoff gefertigt. Insbesondere durch eine dunkle Färbung des weiteren Solarwärmeabsorbers wird dort die Sonneneinstrahlung effektiv aufgenommen und die Wärme absorbiert beziehungsweise an die durchströmende Luft abgegeben. Der weitere Solarwärmeabsorber ist prinzipiell aufgebaut wie der bereits beschriebene Solarwärmeabsorber, und kann insofern zwei oder mehr parallel zueinander angeordnete Platten aufweisen, die durch entsprechende (Quer-)Stege zueinander auf Abstand gehalten und zusammen gehalten sind.

Gemäß einer vorteilhaften Weiterbildung der Erfindung ist vorgesehen, dass zumindest eine der transluzenten Wände/Platten mit einer insbesondere transluzenten Farbe versehen ist, die insbesondere auf die jeweils gebäudeseitige Oberfläche der jeweiliegen Platte des entsprechenden Solarwärmeabsorbers aufgebracht ist. Dadurch wird erreicht, dass die Sonneneinstrahlung erst nach Durchdringen der Platte zumindest teilweise reflektiert wird, wodurch ein größtmöglicher Wärmeeintrag in die Luft gewährleistet ist. Zweckmäßigerweise ist die Farbe derart dünn aufgetragen, dass die Platte insgesamt transluzent, wenn auch in einem geringen Maß, bleibt. Vorzugsweise wird die Farbe derart gewählt, dass das Solarfassadenelement optisch beziehungsweise farblich an das Gebäude beziehungsweise an die Wand der Dämmung des Gebäudes, an welchem es angebracht werden soll, angepasst ist. Die jeweilige transluzente Platte ist vorzugsweise aus einem transluzenten, lichtdurchlässigen Material, insbesondere milchig, gefertigt. Alternativ kann die Platte auch aus einem durchsichtigen Material gefertigt sein und durch den Farbauftrag eine verringerte Lichtdurchlässigkeit und damit eine gewünschte Transluzenz erhalten.

Vorzugsweise ist die umgebungsseitige Platte des Wärmeabsorbers umgebungsseitig mit einer putzartigen lichtdurchlässigen beziehungsweise semi-transparenten Beschichtung versehen. Die Lichtdurchlässigkeit der Beschichtung erlaubt die Sonneneinstrahlung in den oder die Wärmeabsorber, während die putzartige Ausbildung der Beschichtung ein visuell beziehungsweise optisch optimales Eingliedern des Wärmeabsorbers in eine Gebäudefassade erlaubt, die mit einer Putzaußenschicht versehen ist. Entsprechend der Färbung der Außenfassade kann auch die putzartige Beschichtung des Solarwärmeabsorbers gefärbt sein, um den optischen Eindruck zu verbessern. Bevorzugt ist die putzartige Beschichtung aus einem Kunstharz mit darin eingebetteten Quarzen oder Granulat oder dergleichen gefertigt.

Gemäß einer vorteilhaften Weiterbildung der Erfindung ist vorgesehen, dass der Durchströmungsquerschnitt des Wärmeabsorbers größer ist als der Durchströmungsquerschnitt des weiteren Wärmeabsorbers. Hierdurch werden günstige Strömungsbedingungen gewährleistet, die zu einem guten Luftstrom und einer effizienten Wärmeabgabe an die Luft führen.

Besonders bevorzugt ist der Luftpassage beziehungsweise einem Kanal der Luftpassage mindestens eine Luftfördereinrichtung, beispielsweise in Form einer Ventilationsvorrichtung, zugeordnet. Besonders bevorzugt ist die Luftfördereinrichtung an dem Solarfassadenelement befestigt. Vorzugsweise ist die Luftfördereinrichtung in die Dämmung oder die gebäudeseitige Rückseite der Dämmung integriert angeordnet und der Luftpassage zugeordnet.

Vorzugsweise ist das Solarfassadenelement zu Revisionszwecken modulartig ausgebildet und weist insbesondere Mittel zur lösbaren Befestigung an dem Gebäude beziehungsweise an der Wand des Gebäudes auf. Vorzugsweise werden die Mittel zumindest von einem Rahmen gebildet, an welchem die Bestandteile des Solarwärmeelements lösbar befestigt sind. Besonders bevorzugt lassen sich die Bestandteile des Solarwärmeelements, insbesondere der erste und/oder der zweite Absorber, die Dämmung und/oder gegebenenfalls zwischen den Absorbern vorgesehene Abstandshalter durch lösbare Rast- oder Klick-Verbindungen an dem Rahmen befestigen, sodass sie nacheinander in den Rahmen einsetzbar oder aus diesem herausnehmbar sind. Vorzugsweise weisen die Bestandteile schräg liegende Schnittmuster, insbesondere Schrägen an ihrem Außenrand auf, um beim Einlegen eine dichte Verbindung zu gewährleisten.

Das der Erfindung zugrunde liegende Problem wird ebenfalls durch ein Solarfassadensystem mit den Merkmalen des Anspruchs 11 gelöst. Das erfindungsgemäße Solarfassadensystem mit einer an einer Wand, insbesondere Außenwand, eines Gebäudes angeordneten Dämmung weist mindestens ein in die Dämmung integriert angeordnetes Solarfassadenelement auf, wie es obenstehend beschrieben wurde. Wie eingangs erläutert, ist dabei die Dämmung des Solarfassadenelements gebäudeseitig also dem Gebäude zugewandt und der mindestens eine Wärmeabsorber umgebungsseitig, also der Umgebung des Gebäudes zugewandt beziehungsweise dem Gebäude abgewandt, ausgerichtet/angeordnet.

Durch die gebäudeseitige Öffnung der Dämmung, insbesondere durch die Rückseite beziehungsweise gebäudeseitige Seite der Dämmung oder durch die randoffene Aussparung des Solarfassadenelementes zusammen mit der Wand des Gehäuses wird ein die Luftpassage weiterführender Kanal beziehungsweise eine Passage gebildet. Da die Gebäudewand den Kanal mitbildet, findet hier der oben bereits erwähnte vorteilhafte Wärmeaustausch zwischen dem Gebäude beziehungsweise dessen Außenwand und der durch die Luftpassage strömenden Luft statt.

Vorzugsweise führt der Kanal an der Wand, insbesondere zwischen der Wand und der Dämmung des Gebäudes weiter, bis zu einer Durchgangsöffnung in der Wand zu einem Innenraum des Gebäudes. Die Luft wird also vorzugsweise durch den Kanal und anschlie-βend in das Gebäude hineingeleitet. Die Durchgangsöffnung erlaubt somit den Luftaustausch zwischen der Umgebung und dem Gebäude-Innenraum, so dass Frischluft durch die Luftpassage bis in das Gebäude hineingelangt. Dadurch wird gewährleistet, dass bei entsprechenden Außentemperaturen insbesondere Sonneneinstrahlung stets erwärmte und damit auch trockene Frischluft von außen in das Gebäude hineinströmt beziehungsweise strömen kann. Bei geringen Außentemperaturen, beispielsweise nachts oder im Winter wird die im Gebäude gespeicherte Wärme in den Luftstrom abgegeben und dieser wird dadurch erwärmt und in das Gebäude geführt. Besonders bevorzugt wird die Luftpassage dabei zwischen der eigentlichen Dämmung des Gebäudes und der Außenwand des Gebäudes weiter geführt, insbesondere wenn beispielsweise die Durchgangsöffnung entfernt von dem Solarfassadenelement in der Gebäudewand ausgebildet ist. Hierzu weist die Dämmung des Gebäudes eine entsprechende, insbesondere gebäudeseitig randoffene Aussparung auf, die sich an das Solarfassadenelement, insbesondere an dessen Kanal zwischen Dämmung und Wand, anschließt.

Gemäß einer vorteilhaften Weiterbildung der Erfindung ist vorgesehen, dass mehrere Solarfassadenelemente nebeneinander an der Gehäusewand angeordnet sind, wobei insbesondere vorgesehen ist, dass die Kanäle zwischen Dämmung und Wand der nebeneinander angeordneten Solarfassadenelemente ineinander übergehen, so dass die Luft von einem Kanal in den Kanal des daneben angeordneten Solarfassadenelementes gelangt und dort sich mit der durch das andere Solarfassadenelement geströmten Luft vermengt. Die mehreren Solarfassadenelemente können sowohl horizontal als auch vertikal nebeneinander angeordnet sein.

Weiterhin ist bevorzugt vorgesehen, dass eine Luftfördereinrichtung beziehungsweise Luftzirkulationsvorrichtung zur Erzeugung eines Luftstromes durch die Luftpassage, insbesondere an und/oder in dem Gebäude vorgesehen ist. Dadurch kann die oben genannte Luftfördereinrichtung an dem Solarfassadenelement entfallen und das Solarfassadenelement kann einfacher gestaltet werden, insbesondere da an diesem elektrische Anschlüsse und dergleichen nicht notwendig sind. Darüber hinaus kann somit die Luftstromregelung zentral für mehrere Solarfassadenelemente bevorzug mittels nur einer Luftfördereinrichtung, die dem Gebäude zugeordnet ist, bewerkstelligt werden. Besonders bevorzugt ist die Luftfördereinrichtung der Durchgangsöffnung in der Außenwand des Gebäudes zugeordnet.

Das Solarfassadenelement beziehungsweise Fassadenelement und das Solarfassadensystem beziehungsweise System ermöglichen es, dass beispielsweise tagsüber Frischluft in das Gebäude durch die Luftpassage befördert wird, wobei die Frischluft beim Passieren des mindestens einen Solarwärmeabsorbers erhitzt wird und anschlie-βend die Wärme an das Gebäude abgibt, welches die Wärme speichert. Wird nachts weiter oder wieder Frischluft in das Gebäude gefördert, so wird die Frischluft durch die in dem Gebäude gespeicherte Wärme erhitzt, so dass auch nachts warme und entfeuchtete Luft in das Gebäude transportiert werden kann.

Es werden also in Übereinstimmung mit der vorliegenden Erfindung ein Fassadenelement und ein System bereitgestellt, die mindestens einen Solarwärmeabsorber aufweisen, der mindestens eine wenigstens teilweise transluzente Schicht und/oder wenigstens eine transluzente erste und zweite Schicht und/oder mindestens einen Abstandshalter und/oder mindestens einen Dämmblock und/oder eine Schicht und/oder mindestens einen unterstützenden Rahmen und/oder mindestens eine Luftzirkulationsvorrichtung aufweist,
worin ein erster (solarer Wärme-) Absorber (2) vorzugsweise mindestens drei im Wesentlichen flache Platten oder Bögen aufweist, die vorzugsweise im Wesentlichen parallel zueinander durch eine oder eine Vielzahl von Trennwänden beziehungsweise Stegen beabstandet sind, welche im Wesentlichen senkrecht zu den drei Platten oder Bögen ausgebildet sind, um eine oder eine Vielzahl von Kanälen oder Passagen zu bilden, in welchen die erste Platte (14) wahlweise mit einer absorbierenden Schicht (1) bedeckt ist; und/oder
ein zweiter (solarer Wärme-) Absorber (3), der vorzugsweise zumindest zwei im Wesentlichen flache Platten oder Bögen aufweist, die vorzugsweise parallel zueinander durch eine oder eine Vielzahl von Trennwänden beabstandet sind, die im Wesentlichen senkrecht zu den Platten oder Bögen platziert sind und/oder
worin der erste und zweite Absorber vorzugsweise beabstandet zueinander platziert sind, mittels mindestens einem, insbesondere wenigstens zwei Abstandshaltern (4, 30), um eine Passage (18) zu bilden, in welcher die erste Platte (14) des ersten Absorbers (2) vorzugsweise mit einer Öffnung (9) für den Lufteinlass an einem ihrer Enden ausgestattet ist, welches vorzugsweise mit einer Regenschutzvorrichtung (8) ausgestattet ist. Die zweite Platte (20), die an die erste Platte (14) angrenzt, ist vorzugsweise auch mit einer Öffnung (10) an dem gleichen Ende der ersten Platte versehen, wobei das andere Ende mit einer Sperrvorrichtung (25) blockiert ist. Die dritte Platte (15) ist vorzugsweise mit einer Öffnung (21) quer über den mittleren Teil der Länge oder der Höhe nach versehen, worin
die Oberfläche der dritten Platte (15), welche in der Passage (18) exponiert ist, vorzugsweise mit einer hell gefärbten absorbierenden Schicht bedeckt ist, und/oder
worin die erste Platte (16) des zweiten Absorbers (3) vorzugsweise mit einer Öffnung (22) in Richtung des gleichen Endes wie das der ersten Absorberöffnung (9) versehen ist. Die zweite Platte (17) der zweiten Absorber ist vorzugsweise mit einer Öffnung (23) quer über dem Mittelteil der Länge oder der Höhe nach versehen, worin die zweite Platte (17) in Kontakt mit der Dämmung (5) steht, welche mit einer Passage (6) versehen ist, die so ausgerichtet ist, dass das erste Ende der Passage mit der Öffnung (23) in der zweiten Platte (17) verbunden ist, worin sich das andere Ende der Passage (6) vorzugsweise in eine Passage öffnet (13), die zwischen dem Bauwerk oder der Gebäudewand (24) und der Dämmung (5) oder der bestehenden Dämmung des Gebäudes (90) oder einem anderen solaren Fassadenmodul gebildet ist, und/oder
worin - in einem bevorzugten Betriebszustand - Luft durch die Öffnung (9) der ersten und der zweiten Platte des ersten Absorbers strömt, um in Längsrichtung oder Höhenrichtung durch die Passagen oder Kanäle dorthin zu strömen, wo die Luft durch den zwischen der ersten Platte (14) und der zweiten Platte (20) des ersten Absorbers gebildeten Kanal vertikal strömt, um in den zwischen der ersten Platte (16) der zweiten Platte (17) des zweiten Absorbers gebildeten Kanal zu strömen, weil sonst die mögliche Luftströmung durch den Abstandshalter (4) zwischen dem ersten und zweiten Absorber sowie durch die Sperrvorrichtung (25) blockiert ist. Die Luft strömt außerdem durch die Öffnung (23) in der zweiten Platte (17) des zweiten Absorbers zu der Passage (6) in der Dämmschicht zu dem Kanal (13), der zwischen der Gebäudewand (24) und der Dämmung (5), der vorhandenen Dämmung des Gebäudes (90) oder einem anderen Solarfassadenmodul gebildet ist.

Die Luft, die durch die Öffnung (10) der zweiten Platte (20) tritt, strömt vertikal durch den Kanal/die Passage, der/die vorzugsweise zwischen der zweiten Platte (20) und der dritten Platte (15) gebildet ist, um durch die Öffnung (21) der dritten Platte zu strömen, worin Luft vorzugsweise zwischen der Passage (18), die zwischen dem ersten und dem zweiten Absorber gebildet ist, abwärts strömt, weil die nach oben strömende Luft vorzugsweise durch den Abstandshalter (30) blockiert ist, worin die Luft weiter nach oben durch die Öffnung (23) der zweiten Platte (17) des zweiten Absorbers zu der Passage (6) in der Dämmschicht zu der Passage (13), die vorzugsweise zwischen der Gebäudewand (24) und der Dämmung (5) oder der vorhandenen Dämmung des Gebäudes (90) oder einem anderen Solarfassadenmodul gebildet ist, strömt, und/oder
worin mindestens eine Luftzirkulationsvorrichtung (19) vorzugsweise am Ende der genannten Passage (13) vorgesehen ist, die zwischen der Gebäudewand (24), der Dämmung (5) und/oder der vorhandenen Dämmung des Gebäudes (90) oder eines anderem Solarfassadenmodul gebildet ist, und/oder
worin die erste Platte des ersten Absorbers von Sonnenstrahlung bestrahlt wird, und/oder
worin der unterstützende Rahmen (11) derart ausgebildet ist, um die Anordnung des ersten Absorbers, welcher durch den Abstandshalter abgetrennt ist, des zweiten Absorbers und der Dämmung zusammenzuhalten und dadurch ein Modul zu bilden
worin die Vorrichtung den Lufteinlass (9) als Auslass (9) nutzt, um Kondenswasser hinauszuführen. Dies ist notwendig, um die Gebäudefassade zu schützen.

Das Solarfassadenelement weist also zusammengefasst eine Dämmung für das Gebäude, mindestens eine Luftpassage und mindestens einen, der Luftpassage zugeordneten Solarwärmeabsorber auf, um die durch die Luftpassage strömende Luft durch Sonnenstrahlung zu erwärmen/zu erhitzen. Dabei weist der Solarwärmeabsorber mindestens eine, wenigstens teilweise transluzente Schicht auf, welche der Luftpassage zugeordnet ist oder diese bildet, insbesondere einem wenigstens teilweise transluzenten Fassadenelement oder Abdeckung oder Seitenwand der Passage, die Luft, die aus der Luftpassage kommt, wird zu wenigstens einem zwischen der Dämmung und der Gebäudewand geformten Kanal/Passage geleitet. Um die Luft, die aus der Luftpassage kommt, zu diesem Kanal zu leiten, kann ein weiterer Luftkanal bereitgestellt werden. Vorzugsweise ist eine Seite der Wand der Luftpassage als die wenigstens teilweise transluzente Schicht gestaltet. Die Luft, die durch die Luftpassage strömt, wird durch die Sonneneinstrahlung auf die äußere Oberfläche der Luftpassage des Solarfassadenelements erwärmt, wodurch die Sonneneinstrahlung aufgrund des transluzenten Designs der Schicht teilweise in die Luftpassage eindringt. Dadurch wird die Luft in der Passage erwärmt. Aufgrund des transluzenten Designs der Schicht kann diese eine Färbung aufweisen, die an die Färbung des Gebäudes anpasst ist, so dass das Solarfassadenelement wenigstens im Wesentlichen unbemerkt von der Außenseite in das Gebäude integriert werden kann. Der Kanal, der zwischen der Dämmung und der Gebäudewand gebildet ist, lässt zu, dass die Wärme direkt in der Wand oder der Gebäudekonstruktion gespeichert wird, wobei die gespeicherte Wärme für die Erwärmung von kalter Luft verwendet wird, die durch das Solarfassadenelement oder seine respektive Passage oder Kanal strömt, wenn keine Sonnenbestrahlung vorhanden ist.

Das Solarfassadensystem weist zusammengefasst eine Dämmung, die an einer Wand des Gebäudes angebracht ist, und mindestens ein Solarfassadenelement auf, wie es oben beschrieben wurde, das in die Dämmung des Gebäudes integriert ist. Der im Voranstehenden beschriebene Kanal erstreckt sich vorzugsweise von dem Solarfassadenelement weiter entlang der Gebäudewand zwischen der Dämmung des Gebäudes und der Wand und/oder zwischen der Dämmung eines anderen Solarfassadenelements wie oben beschrieben. Dadurch entsteht ein großer Kanal zur Aufnahme der erwärmten Luft, so dass die Wärme dann in der Wand oder in der Gebäudekonstruktion gespeichert werden kann, insbesondere derart, dass die Wärme zur Erwärmung der durch mindestens einen Kanal strömenden kalten Luft verwendet werden kann, bevor die Luft in das Gebäude geleitet wird, um die Innenräume aufzuwärmen. Das Solarfassadensystem weist vor-zugsweise mindestens eine Ventilationsvorrichtung oder Zirkulationsvorrichtung auf, die an dem Kanal angebracht ist, um das Solarfassadensystem zu betreiben. Alternativ kann die Ventilationsvorrichtung auch an das Solarfassadenelement angebracht werden. Entsprechend einer weiteren Ausführungsform der Erfindung weist der Kanal Mittel auf, beispielsweise mindestens ein Ventil oder Ähnliches, um die Luft selektiv aus dem Fassadenelement oder System in die Umgebung des Gebäudes zu leiten.

Die transluzente Schicht des mindestens einen Solarwärmeabsorbers hat vorzugsweise die gleiche Färbung wie die äußere Oberfläche der Dämmung oder der Putz des Gebäudes. Ein Solarwärmeabsorber beziehungsweise Absorber gemäß der vorliegenden Erfindung wird aufgrund seiner wenigstens teilweise transluzenten Platte oder Platten auch transluzenter Absorber beziehungsweise Solarwärmeabsorber genannt. Vorzugsweise können zwei oder mehrere transluzente Absorber nebeneinander angeordnet werden, so dass die Sonneneinstrahlung durch jeden der transluzenten Absorber dringen kann.

### DETAILLIERTE BESCHREIBUNG DER EFINDUNG

Die Merkmale und die Vorteile der Erfindung zeigen sich anhand der Figuren in der folgenden detaillierten Beschreibung und den bevorzugten Ausführungsformen:
- Figur 1: Schematische Darstellung einer der Ausführungsformen des Systems,
- Figur 2: Draufsicht des Systems,
- Figur 3: Schematische Darstellung einer weiteren Ausführungsform des Systems.

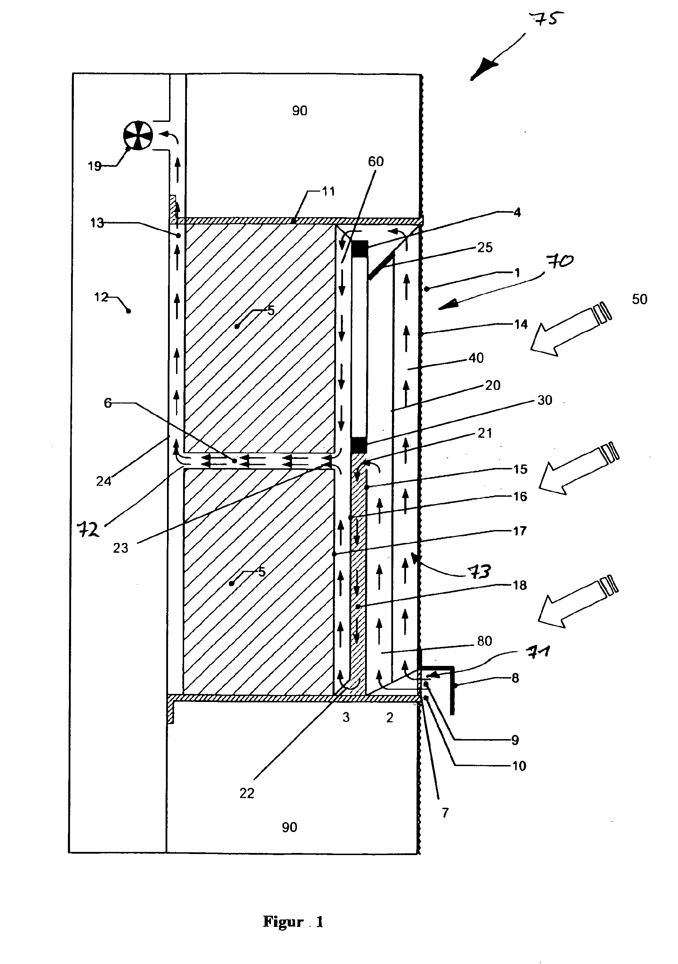

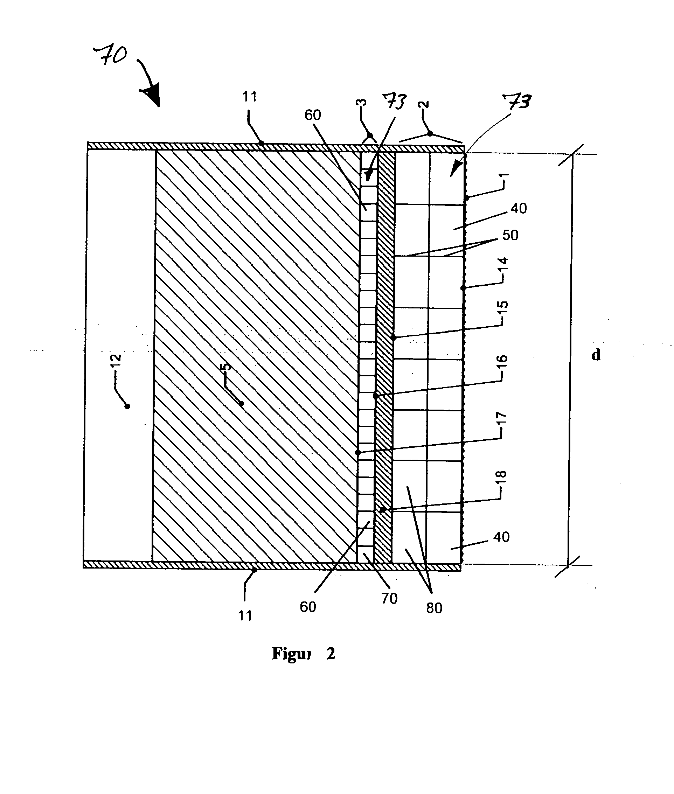

Fig. 1 zeigt eine Schnittdarstellung von vorne einer der Ausführungsformen eines Solarfassadensystems 75. Eine Draufsicht des Abschnittes wird in Fig. 2 schematisch dargestellt. Diese Ausführungsform weist ein Solarfassadenelement 70 mit einem vorzugsweise transluzenten ersten und zweiten Absorber 2, 3 beziehungsweise Solarwärmeabsorber, mit Abstandshaltern 4, 30, mit Dämmblöcken/Schichten 5, mit einem unterstützenden Rahmen 11 und optional mit einer Luftzirkulationsvorrichtung 19 wie unten beschrieben, auf.

Der erste Absorber 2 weist drei im Wesentlichen flache Platten oder Bögen auf, die im Wesentlichen parallel zueinander durch eine oder eine Vielzahl von Trennwänden 50 beabstandet sind (wie in Fig. 2 gezeigt), die im Wesentlichen senkrecht zu den drei Platten oder Bögen angeordnet sind, um einen oder eine Vielzahl von Kanälen oder Passagen zu bilden. Die erste Platte 14 ist wahlweise mit einer solarenergieabsorbierenden Schicht 1, die aus Materialien wie Farbe, Quarz, Polymergranulat, Mineralien oder aus einer Mischung davon besteht, angestrichen oder beschichtet, um eine ähnliche Erscheinung/Struktur wie der Fassadenputz des Gebäudes zu erzeugen.

Der zweite Absorber 3 weist zwei im Wesentlichen flache Platten oder Bögen auf, die im Wesentlichen durch eine oder eine Vielzahl von Trennwänden parallel zueinander beabstandet sind, die im Wesentlichen senkrecht zu den Platten oder Bögen platziert sind.

Die ersten und zweiten Absorber sind mittels Abstandshaltern 4, 30 zueinander beabstandet, um die Passage 18 zu bilden. Die erste Platte 14 des ersten Absorbers 2 ist mit einer Öffnung 9 quer (entlang der Tiefe "d" wie in Fig. 2 gezeigt) für den Lufteinlass an einem von den Enden versehen, welches mit einer bevorzugten Regenschutzvorrichtung 8 ausgestattet ist, welche die Form eines "L-" oder "Z-" Typ Bauteils aufweist. Die zweite Platte 20 des ersten Absorbers 2, die an die erste Platte 14 angrenzt, ist auch mit einer Öffnung 10 quer (entlang der Tiefe "d" wie in Fig. 2 gezeigt) am gleichen Ende der ersten Platte versehen, wobei das andere Ende mit einer blockierenden Vorrichtung blockiert ist. Abhängig von dem Druck der Luftströmung kann die blockierende Vorrichtung auch entfernt werden. Die dritte Platte 15 des ersten Absorbers 2 ist mit einer Öffnung 21 quer entlang der Tiefe "d" (gezeigt in Fig. 2) im mittleren Teil der Länge oder Höhe nach versehen, wie in Fig. 1 gezeigt.

Die erste Platte 16 des zweiten Absorbers 3 ist mit einer Öffnung 22 in Richtung des gleichen Endes wie das der ersten Absorberöffnung 9 versehen. Die zweite Platte 17 des zweiten Absorbers 3 ist mit einer Öffnung 23 quer entlang der Tiefe "d" (gezeigt in Fig. 2) im mittleren Teil längs der Länge/Höhe versehen. Die zweite Platte 17 steht mit der Dämmung 5 in Kontakt, die mit einer Passage 6 versehen ist, die derart ausgerichtet ist, dass sie an die Öffnung 23 anschließt. Die andere Seite der Passage 6 mündet in eine Passage 13, die zwischen der Baukonstruktion/Gebäudewand 24 (des Gebäudes 12) und der Dämmung 5 oder der vorhandenen Dämmung des Gebäudes 90 oder einem anderen solaren Fassadenmodul gebildet ist. Es kann festgestellt werden, dass der Bereich oder die Region 90 oberhalb und unterhalb des Rahmens 11 die Dämmung des Gebäudes ist. Der Bereich oder die Region rechts oder links des Rahmens ist auch Dämmung des Gebäudes. Anstelle dieser Dämmungsbereiche 90 kann ein weiteres Fassadenmodul installiert werden.

Im Betrieb tritt Luft durch die Öffnung 9 der ersten und zweiten Platte des ersten Absorbers, um der Länge oder Höhe nach durch die Passagen/Kanälen 40, wie in Fig. 1 gezeigt, vertikal zu strömen. Es ist zu beachten, dass mindestens eine oder eine Vielzahl solcher Passagen, wie in Fig. 2 gezeigt, durch Trennwände 50 gebildet werden können. In der Passage 40 befindliche Luft wird aufgrund von Sonneneinstrahlung auf der Platte 14 erwärmt (die Richtung wird durch Bezugszeichen 50 in Fig. 1 gekennzeichnet). Dieser Luftstrom strömt weiter zu dem Kanal/den Kanälen 60, die zwischen der ersten Platte 16 der zweiten Platte 17 des zweiten Absorbers gebildet ist/sind. Es ist zu beachten, dass ein oder eine Vielzahl solcher Kanäle 60, wie in Fig. 2 gezeigt, durch eine Trennwand/Trennwände 70 zwischen 16 und 17 gebildet werden können. Ansonsten blockieren der Abstandshalter 4 zwischen dem ersten und dem zweiten Absorber sowie die Sperrvorrichtung 25 die Luftpassage, wie in Fig. 2 gezeigt. Die Luft strömt weiter durch die Öffnung 23 in die Passage 6 in der Dämmung und weiter in den Kanal oder in die Passage 13, der/die zwischen der Wand 24 des Gebäudes 12 und der Dämmung 5 oder der bestehender Dämmung des Gebäudes 90 oder einem anderen Solarfassadenmoduls gebildet ist.

Es ist zu betonen, dass der erfindungsgemäße Kanal oder die erfindungsgemäße Passage 13 die Oberfläche der Gebäudewand oder der Wand mit der Gebäudekonstruktion verwendet, um die warme oder erwärmte Luft mit dem Gebäude in Kontakt zu bringen. Dies ermöglicht eine partielle Wärmeübertragung von der erwärmten Luft zu der Gebäudekonstruktion, was zu einer effizienten Verwendung der bedeutenden thermischen Masse der Gebäudewand oder der Gebäudekonstruktion für Wärmespeicherungszwecke führt. Die gespeicherte Wärme in der Gebäudekonstruktion oder in den Gebäudewänden wird an Wintertagen effizient verwendet, an welchen frische, warme Luft, die in den Absorbern erwärmt wurde, direkt in das Gebäude geblasen wird. In Winternächten wird frische Luft von dem Wärmespeicher erwärmt, d.h. der Gebäudekonstruktion, und dann in das Gebäude hineingeblasen. In Sommernächten wird frische, kalte Luft direkt in das Gebäude geblasen, wobei die Gebäudewände oder Gebäudekonstruktion auch durch diese Luft gekühlt werden; an Sommertagen wird frische Luft aufgrund von Wärmeübertragung auf die kälteren Wände der Gebäudekonstruktion gekühlt und dann in das Gebäude hineingeblasen. Die Passage 13 kann eine beträchtliche Länge haben, um die Gebäudewand oder die Gebäudekonstruktion hinter der Gebäudedämmung auf allen Wänden zu erwärmen, und nicht nur die Gebäudewand oder den Gebäudekonstruktion direkt hinter der Solarfassade. Die erfindungsgemäße Gestaltung der Passage 13 ermöglicht eine partielle Wärmeübertragung von Luft oder zu Luft zu der Gebäudewand oder zur Gebäudekonstruktion, wodurch die Wärmespeicherung erleichtert wird und es dem System ermöglicht wird, zu Zeiten ohne Sonnenbestrahlung effizient zu sein. Aus diesem Grund ist das System der vorliegenden Erfindung äu-βerst vielseitig. Demnach ist die Erfindung neu und erfinderisch, wohingegen konventionelle Sonnenkollektoren und Lufterwärmungssysteme lediglich die Luft erwärmen und die erwärmte Luft nach innen (in das Gebäude oder die Gebäudekonstruktion hinein) fördern, ohne die Wärme zu speichern.

Der andere Luftstrom strömt durch die Öffnung 10 der zweiten Platte 20 und strömt vertikal durch den Kanal oder die Passage 80, der/die zwischen der zweiten Platte 20 und der dritte Platte 15 gebildet ist. Wie in Fig. 2 gezeigt, ist zu beachten, dass ein oder eine Vielzahl solcher Kanäle oder Passagen 40 durch die Trennwand oder die Vielzahl von Trennwänden 50 gebildet werden kann. Die Luft strömt weiter durch die Öffnung 21 in der dritten Platte, um in der Passage 18 abwärts zu strömen, die zwischen dem ersten und zweiten Absorber gebildet ist. Der Luftweg in Aufwärtsrichtung wird in dieser Passage von dem Abstandshalter 30 blockiert. Dieser Luftstrom strömt weiter in Aufwärtsrichtung in die Passage 60 des zweiten Absorbers. Er strömt weiter durch die Öffnung 23 in die in der Dämmung ausgebildete Passage 6. Die Luft strömt dann in die Passage 13, welche wahlweise mit einer Luftfördereinrichtung beziehungsweise Luftzirkulationsvorrichtung 19 versehen ist, um dem Inneren des Gebäudes erwärmte Luft zuzuführen. Der unterstützende Rahmen 11 ist derart angepasst, um die Anordnung des ersten Absorbers, welcher durch den Abstandshalter beabstandet ist, des zweiten Absorbers und der Dämmung zusammenzuhalten und dadurch ein Modul zu bilden. Wahlweise kann, abhängig von den Verhältnissen vor Ort, ein Filter 7 in den Öffnungen 9, 10 angebracht werden. Es ist zu beachten, dass die Absorber vorzugsweise derart montiert sind, dass freiliegende Enden entstehen, d. h. dass die Ober-, Unter- und Seitenteile des Absorbers einen Abstand zum Rand aufweisen, um die aufgrund von variierenden Wetterbedingungen auftretenden Wärmeausdehnung oder Wärmekontraktion kompensieren zu können.

Der erste Absorber 2 bildet somit einen umgebungsseitigen Absorber beziehungsweise Solarwärmeabsorber, dessen Platten 14, 20 und 15 tranluzent ausgebildet sind. Die umgebungsseitige Platte 14 des Absorbers 2 ist mit der solarenergieabsorbierenden jedoch lichtdurchlässigen Schicht 1 versehen, die insbesondere putzartig ausgebildet ist, um eine optische Eingliederung in die Fassade des Gebäudes zu ermöglichen. Sowohl die putzartige Beschichtung 1 als auch die transluzenten Platten 14, 20, 15, können mit einer Farbe versehen sein, die den optischen Effekt weiter optimieren. Ist eine der Platten 14, 20, 15 wie oben bereits erwähnt, mit einer Farbe versehen, so ist die Farbe vorzugsweise auf der gebäudeseitigen Oberfläche beziehungsweise Seite der jeweiligen Platte 14, 20, 15 angeordnet beziehungsweise aufgebracht. Die Beschichtung 1 dient somit primär zur ästhetischen Gestaltung und ist insbesondere nicht spiegelnd sondern matt, eventuell mit stuckähnlicher Struktur, ausgebildet. Durch die nicht- beziehungsweise entspiegelte AußenBeschichtung 1 wird weniger solare Energie bereits an der äußersten Schicht reflektiert, sodass mehr Solarenergie zum Erwärmen der durch die Wärmeabsorber strömende Luft genutzt werden kann. Die gebäudeseitige Außenplatte des umgebungsseitigen Solarwärmeabsorbers 2 weist vorzugsweise eine semi-transparente/transluzente Farbe auf, die auf ihrer gebäudeseitigen Oberfläche aufgetragen ist. Die mittlere Platte des umgebungsseitigen Absorbers 2 ist vorzugsweise ohne Farbauftrag ausgebildet. Vorzugsweise sind die Platten 14, 20 und 15 mit den Stegen beziehungsweise Trennwänden 50 einstückig ausgebildet und insofern aus dem gleichen Material gefertigt. Durch Vorsehen der Beschichtung 1 auf der Platte 14 und der Farbe auf der gebäudeseitigen Außenplatte 15 verbleibt die mittlere Platte 20 farblos transluzent. Der Absorber 2 ist vorzugsweise aus einem transluzenten Material gefertigt. Der transluzente Farbauftrag auf der Platte 15 lässt solare Energie bis zu dem innenliegenden beziehungsweise gebäudeseitigen Absorber 3 durch. Darüber hinaus wird durch den reflektierenden und absorbierenden Teil der Farbschicht auf der Platte 15 eine entsprechende Wärmeenergie in dem umgebungsseitigen Absorber 2 genutzt und wird nicht nutzlos nach außen abgegeben, wie es bei einem Farbauftrag auf der Außenfläche der Platte 14 des Absorbers 2 der Fall wäre.

Der zweite Absorber 3, der insofern einen weiteren Absorber beziehungsweise Solarwärmeabsorber bildet, der zwischen der Dämmung 5 und dem Absorber 2 angeordnet ist, ist vorzugsweise lichtundurchlässig, insbesondere lichtabsorbierend ausgebildet und weist vorzugsweise eine dunkle Farbe auf oder ist aus einem Werkstoff, insbesondere Kunststoff, mit einer dunklen, insbesondere schwarzen Farbe, gefertigt.

Die Öffnungen 9 und 10 des Absorbers 2 sind der Umgebung zugeordnet und bilden insofern zusammen eine umgebungsseitige Öffnung 71 des Absorbers 2. Die durch die Dämmung 5 führende Passage 6, die von einer gebäudeartigen Öffnung 23 des zweiten Absorbers 3 ausgeht, mündet in einer gebäudeseitigen Öffnung 72 in die Passage 13, die als Kanal zwischen der Dämmung 5 und dem Gebäude 12 beziehungsweise dessen Gebäudewand 24 gebildet ist. Die Dämmung 5 ist zur Bildung des Kanals beziehungsweise der Passage 13 vorzugsweise beabstandet zu der Gebäudewand 24 angeordnet - wie dargestellt - oder weist eine gebäudeseitig randoffene Aussparung auf.

Wie zuvor erläutert, ist der erste Absorber 2 als drei-fach-Steg-Platte ausgebildet, die drei Platten 14, 20, 15 aufweist, welche durch Stege beziehungsweise Trennwände 50 miteinander verbunden und auf Abstand zueinander gehalten sind. Alternativ zu dem in Fig. 1 dargestellten Ausführungsbeispiel, kann auch der Absorber 3 als drei-fach-Steg-Platte ausgebildet sein, und insofern zumindest eine weitere Platte, die parallel zu den Platten 16, 17 angeordnet ist, aufweisen. In jedem Fall ist der Absorber 3 bevorzugt aus einem dunklen, insbesondere schwarzen Material gefertigt, um eine möglichst hohe Absorption der solaren Energie und damit eine möglichst hohe Erwärmung der vorbeiströmenden Luft zu gewährleisten. Auch der gebäudeseitig angeordnete Absorber 3 ist vorzugsweise einstückig ausgebildet. Der Querschnitt eines derart gebildeten Absorbers 3 könnte auch dem in Fig. 2 dargestellten Querschnitt des Absorbers 2 entsprechen. Natürlich können beide Absorber 2 und/oder 3 noch weitere entsprechend ausgebildete Platten und Stege beziehungsweise Trennwände 50 aufweisen.

Von der Öffnung 71 verläuft somit eine Luftpassage 73 zunächst durch den oder die Kanäle 40 des Absorbers 2, anschließend durch den oder die Kanäle 60 des Absorbers 3 und danach durch die Passage 6 zu der Öffnung 72, welche in die Passage 13 zwischen Dämmung 5 und Gebäudewand 24 mündet. Die durch die Luftpassage 73 strömende Luft wird somit durch die Wärmeabsorber 2, 3 nacheinander aufgewärmt und anschließend der Gebäudewand 24 derart zugeführt, dass dort ein Wärmeaustausch stattfinden kann. Wie aus Figur 1 ersichtlich, wird die Passage 13 zwischen der Dämmung 90 des Gebäudes 12 und der Gebäudewand 24 weiter, zumindest bis zu der Luftzirkulationsvorrichtung 19, geführt und zweckmäßigerweise in das Gebäude hinein geleitet, vorzugsweise durch eine entsprechende Durchströmungsöffnung in der Gebäudewand 24, um die Innenräume des Gebäudes 12 mit aufgewärmter Frischluft zu versorgen.

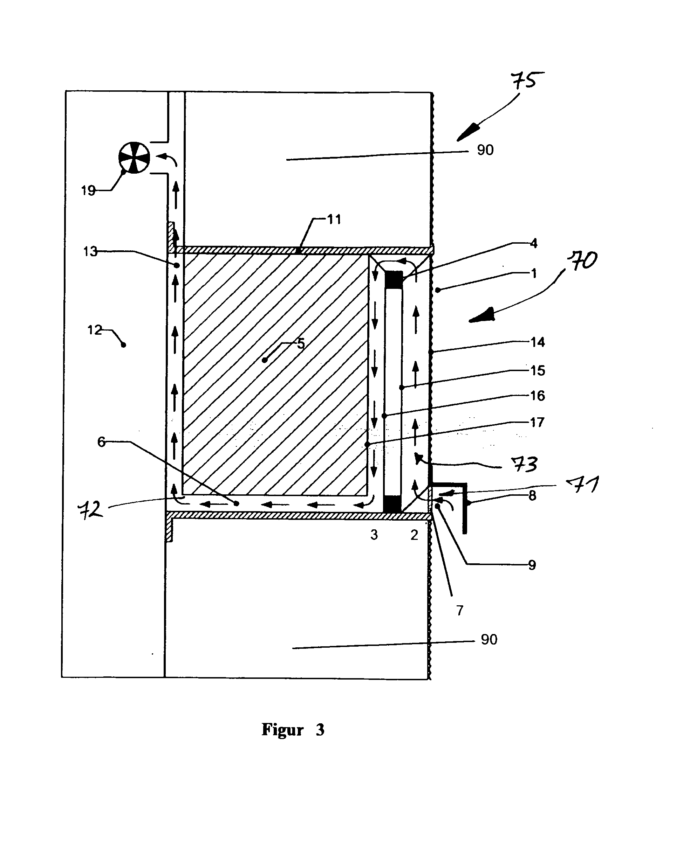

In der Ausführungsform der Fig. 3 weist die Solarfassade die Hälfte der Länge oder Höhe der Erfindung (wie dargestellt in Fig. 1 und 2) auf. Die Passage 6, welche in die Passage 13 führt, ist an dem unteren Ende zwischen dem unteren Rahmen 11 und der Dämmschicht 5 ausgebildet. Der erste Absorber 2 besteht aus zwei im Wesentlichen flachen Platten oder Bögen 14 und 15, die im Wesentlichen parallel, von einer oder einer Vielzahl von Trennwänden 50 zueinander beabstandet sind, die im Wesentlichen senkrecht zu den zwei Platten/Bögen stehen. Wahlweise kann abhängig von den Verhältnissen vor Ort ein Filter 7 an der Öffnung 9 angebracht werden. Die Funktionsweise dieser Ausführungsform entspricht der Funktionsweise der Solarfassade, wie in Fig. 1 und 2 dargestellt und beschrieben.

Der Absorber 2 des Ausführungsbeispiels aus Fig. 3 ist somit als Doppel-Steg-Platte mit zwei parallelen Platten 14, 15 ausgebildet. Die Platte 20 fehlt insoweit. Vorzugsweise ist der Durchströmungsquerschnitt des Absorbers 2 größer als der Durchströmungsquerschnitt des Absorbers 3, um einen vorteilhaften Luftstrom durch das Solarfassadenelement zu gewährleisten. Die vorteilhafte Wahl der Durchströmungsquerschnitte optimiert das Verhältnis zwischen den innen liegenden luftdurchströmten Oberflächen des gebäudeseitigen Absorbers zum Volumen des in diesem Absorber zu wärmenden Luftstroms. Durch den größeren Durchströmungsquerschnitt des umgebungsseitigen Solarwärmeabsorbers 2 entsteht ein geringerer Druckverlust beim Durchströmen dieses Absorbers 2 und es entsteht eine höhere Dämmung/Isolation der Abstrahlungswärme des gebäudeseitigen Absorbers 3 durch das größere Luftvolumen im umgebungsseitigen Absorber 2. Vorzugsweise nimmt der Durchströmungsquerschnitt der Luftpassage 73 insgesamt von außen nach innen beziehungsweise von der Öffnung 71 zu der Öffnung 72 ab, sodass beispielsweise auch die Passage 6 einen kleineren Durchströmungsquerschnitt als der Kanal 60 beziehungsweise der Absorber 3 aufweist. Vorzugsweise ist der Durchströmungsquerschnitt der Passage 13 zwischen der Dämmung und der Gebäudewand 24 im Verhältnis zum Gesamtdurchströmungsquerschnitt des innen liegenden Absorbers 3 größer. Dadurch entsteht ein geringerer Druckverlust. Beim Durchströmen der Passage 13 wird eine höhere Dämmung/Isolation des gesamten Systems zu dem Gebäude 12 durch die größere Luftmenge in dieser Passage 13 gewährleistet.

Darüber hinaus sind die Abstandhalter 4 und 30 derart weit zueinander beabstandet, dass sie sich im Wesentlichen über die gesamte Länge beziehungsweise Höhe des Solarfassadenelementes erstrecken, so dass eine Luft-Dämmung beziehungsweise Isolation zwischen den Absorbern 2 und 3 gebildet wird, wie in Fig. 3 gezeigt. Die Abstandhalter 34 sind hierzu dicht ausgebildet beziehungsweise zwischen den Absorbern einen geschlossenen Raum bildend angeordnet. Gemäß einer vorteilhaften, hier nicht dargestellten Weiterbildung ist vorgesehen, dass zumindest einer der Abstandshalter 4 und/oder 30 luftdurchlässig ausgebildet ist, und hierzu beispielsweise eine entsprechende Druchströmungsöffnung aufweist, so dass Luft in den Bereich zwischen den Absorbern 2 und 3 eindringen und diesen gegebenenfalls durchströmen kann. Entsprechendes gilt auch für die Abstandshalter 4 und 30 in dem Solarfassadenelement gemäß dem Ausführungsbeispiel von Fig. 1.

Vorzugsweise weist der umgebungsseitige Absorber 2 umgebungsseitig mindestens eine Entlüftungsöffnung, insbesondere an seinem oberen Ende, auf. Hierdurch wird gewährleistet, dass, wenn die Luftfördereinrichtung beziehungsweise Luftzirkulationsvorrichtung 19, die insbesondere als Ventilator ausgebildet ist, nicht aktiviert ist und insofern kein Luftstrom aktiv erzeugt wird, die warme aufsteigende Luft aus dem System entweichen kann. Vorzugsweise weist die mindestens eine Lüftungsöffnung hierzu eine Entlüftungsmembran oder ein anders geartetes Entlüftungsventil auf. Das Ventil kann selbsttätig und/oder ansteuerbar ausgebildet sein.

Vorzugsweise ist zumindest der umgebungsseitig angeordnete Absorber 2 geerdet beziehungsweise mit Masse verbunden, beispielsweise über eine die Luftzirkulationsvorrichtung 19 bedienende Steuereinheit oder eine elektrische Verbindung von dem Absorber 2 zu der Gebäudewand oder dessen Fassade, um eine elektrostatische Aufladung des Absorbers 2 zu vermeiden und dadurch die Gefahr durch elektrostatisch bedingte Verunreinigungen zu verringern oder zu vermeiden.

In beiden Ausführungsformen gemäß Fig. 1 und 3 kondensiert Wasser in den äußeren Platten 14, 15 und 20. Dieses Kondenswasser wird durch den Auslass 9 und 10 aus der Fassade herausgeführt.

Gemäß einer alternativen Ausführungsform ist lediglich einer der Absorber 2, 3, insbesondere der Absorber 3 vorgesehen. Umgebungsseitig ist der Absorber 3 mit einer Dämmung versehen, die insbesondere wie der Absorber 2 ausgebildet, jedoch verschlossen ist, sodass seine Eintritts- und Austrittsöffnungen verschlossen sind und ein Luftstrom nicht hindurchgeführt werden kann. Stattdessen wird der Luftstrom nach der Öffnung 71 durch den luftdurchlässigen Abstandshalter 4 oder 30 in den Bereich zwischen dem Absorber 3 und dem jetzt verschlossenen Absorber 2 geführt, durchströmt diesen und gelangt durch den ebenfalls luftdurchlässigen Abstandshalter 30 oder 4 in den Absorber 2, um diesen zu durchströmen. Der Absorber 3 bildet in diesem Fall also einen umgebungsseitigen Absorber, der mit einer umgebungsseitigen Dämmung, die von dem geschlossenen Absorber 2 gebildet wird, versehen ist, wobei die Luftpassage 73 zunächst durch den Bereich zwischen den Absorbern 2, 3 führt und erst dann durch den Absorber 3 und die Dämmung 5.

In einer weiteren Ausführungsform der solaren Fassade wird nur der erste Absorber benutzt (und nicht der zweite Absorber und nicht die dahinter liegende die Dämmung). Diese Konfiguration ermöglicht eine Schattenwirkung im Sommer und eine niedrigere Wärmewirkung im Winter. In dieser Ausführungsform wird der Luftstrom nur an sonnigen Wintertagen, aber nicht im Sommer aufrechterhalten. Das ganze Jahr über ist die Ausführungsform semi-transparent und die Sicht durch den Absorber ist in dieser Konfiguration nicht vollständig versperrt.

In einer weiteren Ausführungsform können eine Vielzahl von Passagen 13 zwischen der Gebäudewand oder der Gebäudekonstruktion und der Dämmung gebildet werden. In einer anderen Variante dieser Ausführungsform wird die Gebäudewand oder die Gebäudekonstruktion teilweise als eine der Oberflächen der Passage 13 verwendet.

In einer weiteren Ausführungsform ist die Lufteinlassvorrichtung 9, 10 im mittleren Teil längs entlang der Länge oder Höhe des ersten Absorbers 2 angebracht.

In einer weiteren Ausführungsform wird das System effizient bei sehr kalten Temperaturen verwendet, bei welchen die thermische Masse der Gebäudewand von der Luft erwärmt wird, um das Innere passiv zu heizen.

In einer weiteren Ausführungsform wird das System der vorliegenden Erfindung an der Gebäudewand ohne die Verwendung des Rahmens 11 montiert.

In einer der Ausführungsformen wird die bestehende Dämmung des Gebäudes 90 verwendet, um die Passage 13 zu bilden, in welcher der Raum zwischen Dämmschicht und Gebäudewand von oben, von unten und an den Seiten der kompletten Fassade blockiert ist. Der Raum zwischen der Wand und der Dämmung wird auf zwei Arten verwendet: zum einen als gedämmte Luftpassage 13 und zum anderen zur Erwärmung der Gebäudewände durch die warme Luft, um die Energie, die von der Sonneneinstrahlung nutzbar gemacht worden ist, zu speichern.

In einer bevorzugten Ausführungsform ist die Luftzirkulationsvorrichtung 19 vorzugsweise auf der Nordseite des Gebäudes und die Absorber auf der Süd- oder West-/Ostseite des Gebäudes platziert, um die Länge der Passage 13 zu vergrößern und um die aufgrund der bestehenden Dämmung gebildete Passage derart zu verwenden, dass die warme Luft maximalen Kontakt zur Gebäudewand aufweist und so viel Energie wie möglich in der Wand/den Wänden speichern kann.

In einer der Ausführungsformen besteht der Absorber 2 aus polymerbasierten Materialien, um die Stoßwirkung/den externen Druckwiderstand zu erhöhen.

In einer weiteren Ausführungsform ist die Geometrie der Solarfassade der vorliegenden Erfindung als quadratische Form ausgebildet (von oben oder von unten gesehen), d. h., dass die Längen des Absorbers und der unteren Seite gleich sind. In einer anderen Variante dieser Ausführungsform weist die Vorrichtung eine rechteckige oder mehreckige Form auf.

In einer weiteren Ausführungsform sind die Platten oder Bögen des Absorbers transparent, transluzent, lichtundurchlässig, gefärbt oder als eine Kombination davon ausgebildet.

In einer weiteren Ausführungsform können die Platten/Bögen des Absorbers 2 und/oder 3 mit ihren Trennwänden in einem Stück extrudiert oder co-extrudiert werden.

In einer weiteren Ausführungsform werden den Öffnungen 9 und 10 der Solarfassaden Innenluft zugeführt. In einer der Varianten dieser Ausführungsform wird die Vorrichtung derart angepasst, dass Innenluft in Zirkulation versetzt wird, wenn die Außenluft verschmutzt und nicht für Heizungszwecke im Haus oder in der zu heizenden Anlage geeignet ist. Die Verwendung von Innenluft hat den weiteren Vorteil von wärmerer Luft im Winter. Dies führt zu höheren Endtemperaturen oder früherer Nutzung des Systems, weil die Luft schneller erwärmt wird. Dies wird bei extremen Winterbedingungen gebraucht oder wenn das Solarfassadensystem in ein bestehendes Heizungs- und Klimatisierungssystems integriert wird.

In einer weiteren Ausführungsform kann der Rahmen und/oder die Dämmschicht in dem gleichen Schaumstoff-Dämmmaterial extrudiert oder expandiert werden, um die Montage und die Integration in den bestehenden Dämmmaterialien des Gebäudes zu vereinfachen. Der Schaumstoff kann aus Polystyrol, Polyurethan, Polypropylen, Polyethylen oder aus anderen Polymeren oder Dämmmaterialien bestehen.

In einer weiteren Ausführungsform werden die extrudierten oder expandierten Schaumstoffpolymere mit verschiedenen Polymeren oder mit Kunststoffen, Metallen, Karbonstrukturen etc. kombiniert, um die spezifische Stärke des Rahmens zu erhöhen.

Das System der vorliegenden Erfindung wurde mit dem Ziel getestet, die Leistung und den Wärmespeichereffekt des Systems zu quantifizieren. Im Folgenden werden die Testergebnisse dargelegt:
- Eine Ausführungsform der vorliegenden Erfindung wurde auf einem Gebäude installiert und getestet, versteckt vor der Öffentlichkeit.
- Die Tests wurden über eine beträchtliche Dauer ausgeführt; die repräsentativen Daten von zwei aufeinanderfolgenden Tagen wurden für die vorhandene Analyse verwendet.
- Die verfügbare Oberfläche, zum Sammeln von solarer Strahlung beziehungsweise die der Sonne ausgesetzt ist, beträgt 24 m². Die Durchflussmenge der Luft wurde bei 165 m³/Std. gehalten.
- Es ist wichtig zu beachten, dass die Sonneneinstrahlung am ersten Tag zwischen 400 W/m² und 900 W/m² variierte, vernünftigerweise kann deshalb ein Mittelwert von 600 W/m² erwogen werden. Die Außentemperatur/Lufteinlasstemperatur variierte im Bereich von 21°C bis 10°C im Laufe des Tages.
- Am ersten Tag wurde die Luft durch die Verwendung des Systems der vorliegenden Erfindung auf 50°C erwärmt und wurde dann bei ca. 38°C stabilisiert. Die Luftzirkulationsvorrichtungen/Ventilatoren waren sowohl am Abend als auch in der Nacht, nachdem die Sonneneinstrahlung zurückging, in Betrieb. Die Raumtemperatur der Luft, die von der Luftzirkulationsvorrichtung bereitgestellt wurde, wurde als ca. 30°C bestimmt, trotz der verminderten Sonneneinstrahlung am Abend und in der Nacht.
- Der zweite Tag wies kaum Sonneneinstrahlung auf. Trotzdem war die Luftzirkulationsvorrichtung in Betrieb, um teilweise frische Luft bei rund 10°C hereinzulassen, wobei diese Luft im System aufgrund von der in den Gebäudewänden gespeicherten Wärme bis 28°C in Abwesenheit von der Sonneneinstrahlung erwärmt wurde.

Der Probelauf des Systems der vorliegenden Erfindung, der vor Ort durchgeführt wurde, und die Quantifizierung der Kenngrößen wiesen deutlich eine technische Wirkung der Erfindung nach, im Sinne der Einspeisung von erwärmter Luft und der Wärmespeicherfähigkeit in der Gebäudewand/Gebäudekonstruktion, welche effizient bei Wetterbedingungen ohne solare Einstrahlung verfügbar ist, verwendet werden kann. Dies führt zu einer Energieeffizienz, wobei trotzdem die Dämmaspekte integriert werden, die Solarenergie nutzbar gemacht wird, die Wärme im Gebäudeteil gespeichert sowie eine geschützte Abdeckung für die weichen Dämmmaterialien bereitgestellt wird.

## Patentansprüche

1. Solarfassadenelement (70) für die Klimatisierung eines Gebäudes (12) mit mindestens einem umgebungsseitigen Solarwärmeabsorber (2) und mit einer gebäudeseitigen Dämmung (5) sowie mit einer Luftpassage (73), die durch den Solarwärmeabsorber (2) und die Dämmung (5) führt und dazu eine umgebungsseitige Öffnung (71) an dem Solarwärmeabsorber (2) und eine gebäudeseitige Öffnung (72) an der Dämmung (5) aufweist, wobei der Solarwärmeabsorber (2) zumindest bereichsweise transluzent ausgebildet ist, um durch die Luftpassage (73) strömende Luft durch Sonneneinstrahlung zu erwärmen/zu erhitzen.

2. Solarfassadenelement nach Anspruch 1, **dadurch gekennzeichnet, dass** zumindest eine, insbesondere umgebungsseitige Platte (14) des Solarwärmeabsorbers (2) transluzent ausgebildet ist.

3. Solarfassadenelement nach einem der vorhergehenden Ansprüche, **dadurch gekennzeichnet, dass** zwischen dem Wärmeabsorber (2) und der Dämmung (5) zumindest ein weiterer, insbesondere lichtundurchlässig ausgebildeter Solarwärmeabsorber (3) angeordnet ist, wobei die Luftpassage (73) sequentiell durch die Solarwärmeabsorber (2, 3) führt.

4. Solarfassadenelement nach einem der vorhergehenden Ansprüche, **dadurch gekennzeichnet, dass** eine gebäudeseitige Platte (15) des Solarwärmeabsorbers (2) transluzent ausgebildet ist.

5. Solarfassadenelement nach einem der vorhergehenden Ansprüche, **dadurch gekennzeichnet, dass** die gebäudeseitige Öffnung (72) der Luftpassage in eine gebäudeseitige randoffene Aussparung der Dämmung (5) mündet.

6. Solarfassadenelement nach einem der vorhergehenden Ansprüche, **dadurch gekennzeichnet, dass** zumindest eine der transluzenten Platten (14, 15, 20) mit einer Farbe versehen ist, die insbesondere auf der jeweils gebäudeseitigen Oberfläche der Platte (14, 15, 20) aufgebracht ist.

7. Solarfassadenelement nach einem der vorhergehenden Ansprüche, **dadurch gekennzeichnet, dass** die umgebungsseitige Platte (14) des Solarwärmeabsorbers (2) umgebungsseitig mit einer putzartigen lichtdurchlässigen Beschichtung (1) versehen ist.

8. Solarfassadenelement nach einem der vorhergehenden Ansprüche, **dadurch gekennzeichnet, dass** der Durchströmungsquerschnitt des Solarwärmeabsorbers (2) größer ist als der des weiteren Solarwärmeabsorbers (3).

9. Solarfassadenelement nach einem der vorhergehenden Ansprüche, **dadurch gekennzeichnet, dass** der Luftpassage (73) mindestens eine Luftfördereinrichtung (19) zugeordnet ist.

10. Solarfassadenelement nach einem der vorhergehenden Ansprüche, **dadurch gekennzeichnet, dass** es zu Revisionszwecken modulartig ausgebildet ist und insbesondere Mittel zur lösbaren Befestigung an einem Gebäude (12) aufweist.

11. Solarfassadensystem (75) eines Gebäudes (12), mit einer an einer Wand (24) des Gebäudes (12) angebrachten Dämmung (90) und mit mindestens einem in die Dämmung (90) integriert angeordneten Solarfassadenelement (70) nach einem oder mehreren der vorhergehenden Ansprüche.

12. Solarfassadensystem nach Anspruch 11, **dadurch gekennzeichnet, dass** die Rückseite der Dämmung (5) oder eine gebäudeseitige die randoffene Aussparung der Dämmung (5) des Solarfassadenelementes (70) zusammen mit der Wand (24) des Gebäudes (12) einen Kanal (13) bildet.

13. Solarfassadensystem nach einem der vorhergehenden Ansprüche, **dadurch gekennzeichnet, dass** der Kanal (13), insbesondere zwischen der Wand (24) und der Dämmung (90) des Gebäudes weitergeführt, bis zu einer Durchgangsöffnung in der Wand (24) des Gebäudes (12) zu einem Innenraum des Gebäudes (12) führt.

14. Solarfassadensystem nach einem der vorhergehenden Ansprüche, **dadurch gekennzeichnet, dass** mehrere Solarfassadenelemente (70) nebeneinander angeordnet sind, wobei insbesondere die Kanäle (13) zwischen der jeweiligen Dämmung (5) und Wand (24) strömungstechnisch miteinander verbunden sind.

15. Solarfassadensystem nach einem der vorhergehenden Ansprüche, **dadurch gekennzeichnet, dass** eine Luftfördereinrichtung (19) zur Erzeugung eines Luftstroms durch die Luftpassage (73), insbesondere an/in dem Gebäude (12) vorgesehen ist.
